# EUROPEAN PATENT SPECIFICATION

(11) **EP 3 357 877 B1**
(45) Date of publication and mention of the grant of the patent: **05.08.2020**
(21) Application number: 18154886.8
(22) Date of filing: 02.02.2018
(51) Int. Cl.: C03C 3/064, C03C 4/20, C03C 8/08

(54) **ENAMEL COMPOSITION, PREPARATION METHOD OF ENAMEL COMPOSITION, AND COOKING APPLIANCE**
EMAILZUSAMMENSETZUNG, HERSTELLUNGSVERFAHREN EINER EMAILZUSAMMENSETZUNG UND KOCHGERÄT
COMPOSITION D'ÉMAIL, PROCÉDÉ DE PRÉPARATION D'UNE COMPOSITION D'ÉMAIL ET APPAREIL DE CUISSON

(30) Priority: 02.02.2017 KR 20170014833
(43) Date of publication of application: 08.08.2018
(73) Proprietor: LG Electronics Inc., Yeongdeungpo-gu Seoul 07336 (KR)
(72) Inventor: CHOI, Wongyu, 08592 Seoul (KR); KIM, Youngseok, 08592 Seoul (KR); CHOI, Suyeon, 08592 Seoul (KR)
(74) Representative: Vossius & Partner Patentanwälte Rechtsanwälte mbB

(56) References cited:
- US-A1- 2013 299 482
- US-A1- 2013 299 484
- DATABASE WPI Week 197933 Thomson Scientific, London, GB; AN 1979-61268B XP002782052, -& SU 631 478 A (LENINGRAD LENSOVET TECH) 5 November 1978 (1978-11-05)

## Description

### BACKGROUND

### Field of the Present Disclosure

Embodiments relate to an enamel composition, a method of manufacturing the composition, and a cooking appliance including the composition.

### Discussion of Related Art

Enamel refers to a glass glaze coated on a surface of a metal plate. A typical enamel may be used for cooking appliances such as microwave ovens and ovens. On the other hand, enamels may be classified into oxidation-resistant enamel which can prevent oxidation, and heat-resistant enamel which can withstand high temperature, depending on the kind or use of glaze. Further, depending on the material added into the enamel, the enamels may be classified into aluminum enamel, zirconium enamel, titanium enamel, and soda glass enamel.

In general, a cooking appliance refers to a device that heats and cooks food using a heating source. The food waste generated in the cooking process contacts the inner wall of the cavity portion of the cooking appliance. Therefore, when the food is cooked in the cooking appliance, it is necessary to clean the inside of the cavity portion. In addition, the cooking of the food involves high temperature, and, thus, the inner wall of the cavity portion may be exposed to organic substances and alkaline ingredients. Therefore, when the enamel is used in the cooking appliance, such an enamel requires heat resistance, chemical resistance, abrasion resistance and contamination resistance. Therefore, there is a need for a composition for enamel for improving the heat resistance, chemical resistance, abrasion resistance and contamination resistance of enamel.

Particularly, in order to easily clean the enamel used in an oven, a pyrolysis method of burning contaminants at high temperature, a method of using a strongly alkaline detergent, or a water soaking may be used. Accordingly, since the enamel is exposed to a high-temperature or highly-alkaline detergent, the enamel requires high heat resistance and chemical resistance. US 2013/0299482 and US2013/0299484 describe such enamels.

### SUMMARY

This Summary is provided to introduce a selection of concepts in a simplified form that are further described below in the Detailed Description. This Summary is not intended to identify all key features or essential features of the claimed subject matter, nor is it intended to be used alone as an aid in determining the scope of the claimed subject matter.

Embodiments provide a glass appliance with improved cleanability and white color, and a cooking appliance including the composition.

Embodiments provide an enamel composition according to claim 1. As used herein, the term "frit" preferably refers to a powder which is obtained by milling a material, e.g. in a ball mill. The process of preparing frit typically includes melting the raw material(s) to make cullets and ballmilling the cullets to thereby obtain a frit. The composition of the raw material is as defined herein. The term "frit" more preferably refers to finely ground glass. The term "frit" thus preferably refers to glass frit.

According to the present disclosure, the enamel composition may have improved cleanability. Accordingly, the cleaning of the cooking appliance may be improved. In detail, the cooking appliance can be easily cleaned simply by water-soaking.

That is, although the inner surface of the door and the inner surface of the cavity portion are contaminated by food and organic substances generated during the cooking process while the cooking space defined in the cavity portion of the cooking appliance is closed, the inner surface of the door and the inner surface of the cavity portion may be easily cleaned simply by water-soaking.

Further, the enamel composition according to the present invention may be in the form of a white functional layer and be preparable by using only a single type of frit. Accordingly, it is possible to omit the step of mixing different types of frit to realize the white color, and, thus, the process efficiency can be improved.

Further, since the functional layer coated by the enamel composition according to the embodiment is excellent in cleanability, the inner surface of the cooking appliance can be easily cleaned even with little energy consumption.

Further, contaminants including oil, such as chicken oil, and sugars can be effectively removed with less energy and less time, from the functional layer coated by the enamel composition according to the invention.

Further, since the functional layer may be directly coated on the inner surfaces of the cavity portion and the door without a separate buffer layer therebetween, this can improve production process efficiency and minimize an increase in thickness of the cavity portion and door due to the coating of the functional layer.

Further, since the enamel composition according to the embodiment has a softening point higher than a certain temperature and a proper thermal expansion coefficient, the composition can withstand cooking and cleaning at a high temperature for a long time.

### BRIEF DESCRIPTION OF THE DRAWINGS

The accompanying drawings, which are incorporated in, and form a part of, this specification and in which like numerals depict like elements, illustrate embodiments of the present invention and, together with the description, serve to explain the principles of the invention.
FIG. 1 is a front view of a cooking appliance according to an embodiment.
FIG. 2 and FIG. 3 are enlarged cross-sectional views of a portion of the inner surface of the cavity portion of Fig. 1
FIG. 4 and FIG. 5 are enlarged views of a portion of the inner surface of the door of FIG. 1;
FIG. 6 is a view for illustrating that contaminants are removed from the coating layer.

### DETAILED DESCRIPTION

For simplicity and clarity of illustration, elements in the figures are not necessarily drawn to scale. The same reference numbers in different figures denote the same or similar elements, and as such perform similar functionality. Also, descriptions and details of well-known steps and elements are omitted for simplicity of the description. Furthermore, in the following detailed description of the present disclosure, numerous specific details are set forth in order to provide a thorough understanding of the present disclosure. However, it will be understood that the present disclosure may be practiced without these specific details. In other instances, well-known methods, procedures, components, and circuits have not been described in detail so as not to unnecessarily obscure aspects of the present disclosure.

The terminology used herein is for the purpose of describing particular embodiments only and is not intended to be limiting of the present disclosure. As used herein, the singular forms "a" and "an" are intended to include the plural forms as well, unless the context clearly indicates otherwise. It will be further understood that the terms "comprises", "comprising", "includes", and "including" when used in this specification, specify the presence of the stated features, integers, operations, elements, and/or components, but do not preclude the presence or addition of one or more other features, integers, operations, elements, components, and/or portions thereof. As used herein, the term "and/or" includes any and all combinations of one or more of the associated listed items. Expression such as "at least one of' when preceding a list of elements may modify the entire list of elements and may not modify the individual elements of the list.

Unless otherwise defined, all terms including technical and scientific terms used herein have the same meaning as commonly understood by one of ordinary skill in the art to which this inventive concept belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

In the following description, numerous specific details are set forth in order to provide a thorough understanding of the present disclosure. The present disclosure may be practiced without some or all of these specific details. In other instances, well-known process structures and/or processes have not been described in detail in order not to unnecessarily obscure the present disclosure.

Hereinafter, an enamel composition according to an embodiment and a cooking appliance including the same will be described with reference to the drawings.

Of the terms described below, adherence may be defined as the prefiring coatability of the enamel composition, and adhesion may be defined as post-firing coatability thereof.

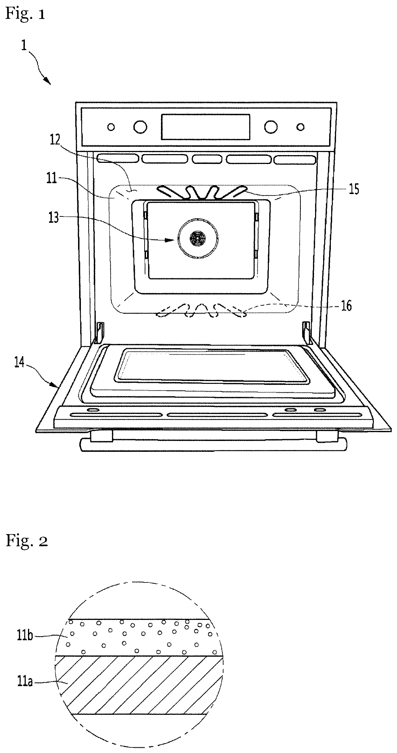

FIG. 1 is a front view of a cooking appliance according to an embodiment.

Referring to FIG. 1, a cooking device or appliance 1 may include a cavity portion 11 having a cooking space 12 defined therein; a door 14 configured to selectively open and close the cooking space 12; and at least one heat source configured to supply heat for heating food to be cooked within the cooking space 12.

In detail, the cavity portion 11 may be formed in a hexahedral shape with the front face opened. The heat source includes the following components: a convection assembly 13 for discharging heated air into the cavity in the cavity portion 11, an upper heater 15 disposed on the upper inner surface of the cavity portion 11, and a lower heater 16 disposed on a lower inner surface of the cavity portion 11. Of course, the heat source does not necessarily have to include all of the convection assembly 13, the upper heater 15 and the lower heater 16. That is, the heat source may include at least one of the convection assembly 13, the upper heater 15, and the lower heater 16.

The upper heater 15 and/or the lower heater 16 may be provided inside or outside the cavity of the cavity portion 11.

Referring to FIG. 2 to FIG. 5, a functional layer may be disposed on the inner surface of the cavity portion 11 and/or on the inner surface of the door 14.

The functional layer may comprise an enamel composition as described below. The functional layer may be coated on the inner surface of the cavity portion 11 and/or the inner surface of the door 14. That is, the functional layer may be a coating layer.

The functional layer can improve the heat resistance, chemical resistance and stain resistance of the inner surface of the cavity portion 11 and the inner surface of the door 14.

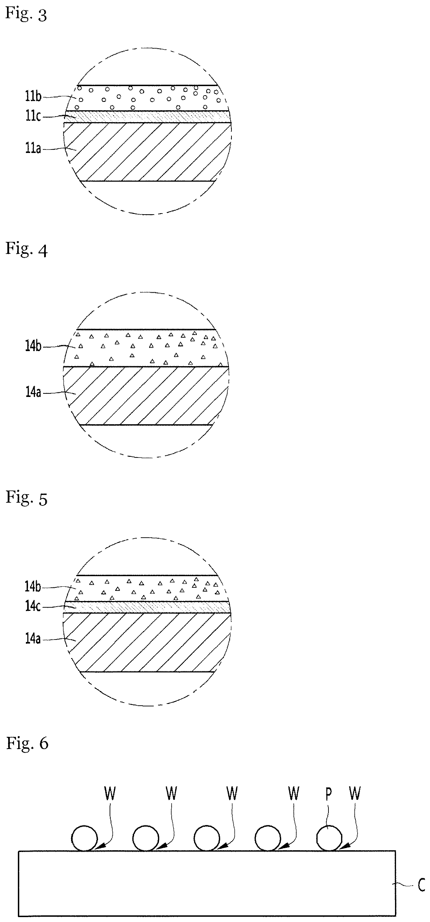

Referring to FIGS. 2 and 3, the functional layer may be disposed on the cavity portion.

The cavity portion 11 may include a metal layer 11a, and a functional layer 11b on the metal layer 11a. It is to be understood that "on the metal layer" or "on the metal base" does not require a direct contact between the functional layer and the metal layer or metal base.

The metal layer 11a may be the base of the cavity portion.

Referring to FIG. 2, the functional layer 11b may be disposed in direct contact with the metal layer 11a.

Alternatively, referring to FIG. 3, the functional layer 11b may be in indirect contact with the metal layer 11a. In detail, a buffer layer 11c may be disposed between the metal layer 11a and the functional layer 11b. The buffer layer 11c may comprise an adhesive layer. That is, by the buffer layer 11c, the adhesion between the metal layer 11a and the functional layer 11b can be improved.

Referring to FIGS. 4 and 5, the functional layer may be disposed on the inner surface of the door 14. In detail, the functional layer may be disposed on the inner surface of the door 14 facing the cooking space 12 with the cooking space 12 being closed. The functional layer can improve the heat resistance, chemical resistance and stain resistance of the inner surface of the door 14.

The door 14 may include a metal layer 14a, and a functional layer 14b on the metal layer 14a.

The metal layer 14a may be the base of the cavity portion.

Referring to FIG. 4, the functional layer 14b may be disposed in direct contact with the metal layer 14a.

Alternatively, referring to FIG. 5, the functional layer 14b may be disposed in indirect contact with the metal layer 14a. In detail, a buffer layer 14c may be disposed between the metal layer 14a and the functional layer 14b. The buffer layer 14c may comprise an adhesive layer. That is, the adhesion between the metal layer 14a and the functional layer 14b can be improved by the buffer layer 14c.

The functional layer may be formed by coating the enamel composition on the inner surface of the cavity portion 11 or on the inner surface of the door 14. In detail, the functional layer is coated on the inner surface of the cavity portion 12 and on the inner surface of the door 14 so that the inner surface of the cavity portion 12 and the inner surface of the door 14 have enhanced heat resistance, chemical resistance and stain resistance.

Hereinafter, the enamel composition coated on the inner faces of the cavity portion and door of the cooking appliance will be described. The term "enamel" generally refers to an organic or inorganic coating, e.g., a surface treatment, which may, e.g., be a paint or glass. In the present invention, the term "enamel" preferably refers to a coating (e.g. surface treatment) of an inorganic compound (e.g. containing at least 80% by weight of inorganic compound(s)) which is preferably based on glass and/or ceramics. The "enamel" preferably does not contain metals (i.e. metals in their metallic form having an oxidation state of o) and preferably is solid at 25 °C. The "enamel" typically contains glass as a main component (at least 50% by weight) and additionally a ceramic component. Ceramics are generally considered to be non-metallic solids of inorganic compounds. The "enamel" can, e.g., be either porcelain enamel or vitreous enamel. The term "organic or inorganic coating" refers to any coating which contains organic compounds or inorganic compounds or both. Thus, the term "enamel composition" preferably refers to a composition which can be used to prepare such an organic or inorganic coating. The enamel composition may be a glass composition.

The enamel composition according to the embodiment may include glass frit including P₂O₅, TiO₂, and group I-based oxide.

The P₂O₅ may be contained at up to about 30 wt% based on the total weight of the frit. Specifically, the P₂O₅ may be present in an amount of about 20 wt% to about 30 wt% based on the total weight of the frit. More specifically, the P₂O₅ may be present in an amount from about 22 wt% to about 28 wt% based on the total weight of the frit.

The P₂O₅ may be included in the enamel composition to improve cleanability of the enamel composition. Further, the P₂O₅ may be included in the enamel composition to improve the hydrophilicity of the enamel composition. Accordingly, as shown in Fig. 6, due to the presence of P₂O₅, the coating layer C containing the enamel composition is hydrophilic. Thus, after water-soaking, water W can effectively penetrate the interface between the coating layer C and the contaminants P on the coating layer C, and the contaminants can be easily removed from the coating layer C.

If P₂O₅ is included at less than about 20 wt% based on the total weight of the frit, the cleanability of the enamel composition may be degraded. Further, if P₂O₅ is included in an amount of more than about 30 wt% based on the total weight of the frit, the thermal properties of the enamel composition may be degraded, the vitrification of the enamel composition and adherence of the enamel composition may be degraded.

Ti02 may be contained at less than about 20 wt% based on the total weight of the frit. Specifically, Ti02 may be present at about 10 wt% to about 20 wt%, based on the total weight of the frit. Preferably, TiO₂ may be present in an amount of about 12 wt% to about 18 wt% based on the total weight of the frit.

Ti02 can improve the opacity of the enamel composition according to the embodiment. That is, the opacity of the coating composition of the enamel composition coated as the functional layer can be improved by TiO₂. In other words, the functional layer formed by the enamel composition including TiO₂ may exhibit white color.

When TiO₂ is contained at less than about 10 wt% based on the total weight of the frit, the opacity of the enamel composition may be lowered such that the color of the buffer layer or the color of the base may be viewed from the outside.

That is, when TiO₂ is contained at less than about 10 wt% based on the total weight of the frit, it is difficult to realize the white color of the functional layer formed by the enamel composition. Thus, when placing the functional layer on the base or buffer layer, the color of the base or buffer layer may be visible from outside, in addition to the color of the functional layer.

Further, if TiO₂ is contained in an amount greater than about 20 wt% based on the total weight of the frit, cleanability of the enamel composition may be degraded. This may lead to deviation from the vitrification area. This may weaken the vitrification and durability of the enamel composition.

As used in the present invention the term 'group I-based oxide' refers to any oxides of any metals in group I of the periodic table and any mixtures thereof. Preferably, the term 'group I-based oxide' refers to any oxides of Li, Na, K, Rb or Cs and any mixtures thereof. The group I-based oxide preferably includes at least one metal oxide selected from a group consisting of Li₂O, Na20 and K20. Specifically, the group I-based oxide may include Na₂O, K20 and Li₂O. That, the frit may contain all of Na₂O, K₂O and Li₂O. As will be apparent to a skilled person, the term group I-based oxide does not refer to H₂O, but may refer to any oxides of any metals in group I of the periodic table of elements. As such it is apparent that the following ranges of the amount of the group I-based oxide do not include any amounts of water which might be present.

The group I-based oxide may be contained up to about 30 wt% based on the total weight of the frit. Specifically, the group I-based oxide may be contained at from about 15 wt% to about 30 wt% based on the total weight of the frit. Preferably, the group I-based oxide may be contained at from about 20 wt% to about 25 wt% based on the total weight of the frit.

The group I-based oxide may be included in the enamel composition to improve the cleanability and durability of the enamel composition and reduce the melting temperature.

That is, the group I-based oxide can improve the cleanability of the enamel composition together with the P₂O₅. For example, Na20 and K20 may be incorporated in the enamel composition to improve the cleanability of the enamel composition. Further, Li₂O may be incorporated in the enamel composition to improve the durability of the enamel composition.

If the group I-based oxide is contained at less than about 15 wt% based on the total weight of the frit, the cleanability and durability of the enamel composition may be degraded. Further, when the group I-based oxide is contained in an amount exceeding about 30 wt% based on the total weight of the frit, the thermal properties of the enamel composition may be deteriorated and the vitrification may not be achieved.

For example, if the frit contains all of Na₂O, K₂O and Li₂O, Na₂O, K₂O and Li₂O may be included as follows.

Na₂O may be present in an amount of about 5 wt% to about 10 wt% based on the total weight of the frit. Specifically, the Na20 may be present in an amount of about 6 wt% to about 9 wt% based on the total weight of the frit.

K₂O may be present at about 10 wt% to about 20 wt% based on the total weight of the frit. Specifically, K₂O may be present at about 12 wt% to about 18 wt% based on the total weight of the frit.

If contents of Na₂O and the K20 are out of the range specified above, the cleanability of the enamel composition may be degraded.

Li₂O may be present in an amount of about 0.1 wt% to about 1.5 wt% based on the total weight of the frit. Specifically, Li20 may be present in an amount of about 0.5 wt% to about 1 wt% based on the total weight of the frit.

If content of Li20 is out of the range specified above, the durability is degraded and vitrification may not be achieved.

P₂O₅, Na₂O, K20, and Li₂O may form an alkali phosphate structure. Further, P₂O₅, Na₂O, K20, and Li₂O may impart improved cleanability and durability to enamel compositions according to the embodiments.

That is, when the frit contains P₂O₅, Na₂O, K20, and Li₂O, the functional layer can be easily cleaned by water when the functional layer formed by the enamel composition according to the embodiment is contaminated by food or the like.

The frit may further comprise SiO₂.

SiO₂ may, e.g., be present at up to about 20 wt% based on the total weight of the frit. Preferably, Si02 may be present in an amount of from about 10 wt% to about 20 wt% based on the total weight of the frit. More preferably, SiO₂ may be present in an amount from about 12 wt% to about 20 wt% based on the total weight of the frit.

SiO₂ may be incorporated in the enamel composition to form a structure of the enamel composition, to improve the skeleton of the structure, and to improve the acid resistance of the frit. In particular, due to SiO₂, the enamel composition may have improved acid resistance. Further, SiO₂ may be contained in the enamel composition to improve the water resistance. In other words, SiO₂ may be contained in the enamel composition, to prevent the functional layer formed of the enamel composition from absorbing water.

If SiO₂ content is less than about 10 wt% based on the total weight of the frit, the structure of the enamel composition may be degraded, resulting in a reduction in durability, acid resistance, and water resistance of the functional layer. Further, if SiO₂ is contained in an amount exceeding about 20 wt% based on the total weight of the frit, the cleanability of the frit may be lowered.

The frit may further comprise B₂O₃.

B₂O₃ may, e.g., be present at up to about 15 wt% based on the total weight of the frit. Preferably, B₂O₃ may be present in an amount of about 5 wt% to about 15 wt% based on the total weight of the frit. More preferably, B₂O₃ may be contained at from about 7 wt% to about 13 wt%, based on the total weight of the frit.

B₂O₃ can enlarge the vitrification region of the frit and appropriately control the thermal expansion coefficient of the enamel composition according to the embodiment. Further, containing B₂O₃ in the enamel composition, allows each component contained in the enamel composition to be uniformly dissolved prior to firing.

When B₂O₃ is contained at less than about 5 wt% based on the total weight of the frit, the vitrification area is reduced and thus the glass structure is degraded, thereby reducing the durability of the functional layer. Further, if B₂O₃ content is greater than about 15 wt% based on the total weight of the frit, the cleanability of the frit may be degraded.

The frit may further comprise Al₂O₃.

Al₂O₃ may, e.g., be present at up to about 30 wt% based on the total weight of the frit. Preferably, Al₂O₃ may be present in an amount of about 10 wt% to about 30 wt% based on the total weight of the frit. More preferably, Al₂O₃ may be present in an amount from about 15 wt% to about 25 wt% based on the total weight of the frit.

Al₂O₃ may be incorporated in the enamel composition to improve the chemical durability of the enamel composition and improve the heat resistance and surface hardness.

If the Al₂O₃ is contained at less than about 10 wt% based on the total weight of the frit, the chemical resistance and durability of the enamel composition may be reduced. Further, when Al₂O₃ is contained in an amount of more than about 30 wt% based on the total weight of the frit, the cleanability of the frit may be lowered, adhesion may be lowered due to an increase in firing temperature and melting temperature, and production process efficiency may be reduced.

The frit may further comprise ZrO₂.

ZrO₂ may, e.g., be present at up to about 5 wt% based on the total weight of the frit. Preferably, ZrO₂ may be present at about 1 wt% to about 5 wt%, based on the total weight of the frit. More preferably, ZrO₂ may be present in an amount from about 2 wt% to about 4 wt% based on the total weight of the frit.

Zr02 may be incorporated into the enamel composition to improve the chemical durability of the enamel composition.

If ZrO₂ is contained at less than about 1 wt% based on the total weight of the frit, the chemical resistance and durability of the enamel composition can be reduced. Further, when Zr02 is contained in an amount of more than about 5 wt% based on the total weight of the frit, the cleanability of the frit may be lowered, the vitrification may not be achieved, and the adhesion may be degraded due to increase in the melting temperature thereof.

That is, Al₂O₃ and ZrO₂ may improve the chemical durability of the frit. In particular, Al₂O₃ and ZrO₂ may improve the chemical durability of the alkali phosphate glass structure formed by P₂O₅, Na20, K₂O and LiO₂ via structural stabilization.

The frit contains one or more fluorinated compounds. The fluorinated compound is selected from NaF or AlF₃. Specifically, the fluorinated compound may include NaF and AlF₃. That is, the frit may contain both NaF and AlF₃.

The fluorinated compound may function to properly control the surface tension of the coating formed by the enamel composition. Further, the fluorinated compound may allow the vitrification area of the frit to be enlarged, and allow the melting temperature of the enamel composition to be lowered.

The fluorinated compound is contained at from about 0.1 wt% to about 5 wt%, based on the total weight of the frit. More preferably, the fluorinated compound may be present in an amount of about 1 wt% to about 4 wt% based on the total weight of the frit.

When the fluorinated compound is contained at less than about 0.1 wt% based on the total weight of the frit, the vitrification area is reduced and thus the glass structure is degraded, thereby decreasing the durability of the functional layer. Further, if the fluorinated compound is contained in an amount greater than about 5 wt% based on the total weight of the frit, the cleanability of the frit may be degraded.

The frit may further contain a group II-based oxide. The group II-based oxide is preferably selected from CaO, BaO, or MgO. Specifically, the group II-based oxide may include CaO, BaO and MgO. That is, the frit may include CaO, BaO and MgO.

The group II-based oxide may, e.g., be contained in an amount of up to about 10 wt% based on the total weight of the frit. Preferably, the group II-based oxide may be contained in an amount of about 0.1 wt% to about 10 wt% based on the total weight of the frit. More preferably, the group II-based oxide may be present in an amount of about 3 wt% to about 7 wt% based on the total weight of the frit.

The group II-based oxide can improve the durability of the enamel composition.

If the group II-based oxide is contained at less than about 0.1 wt% based on the total weight of the frit, the chemical composition, surface tension and durability of the enamel composition may be reduced. Further, if the group II-based oxide is contained in an amount exceeding about 10 wt% based on the total weight of the frit, the cleanability of the frit may be lowered.

The diameter of the frit is preferably about 1 to 50 µm. The size of the particles can be measured with a particle size analyzer (PSA), e.g. using laser diffraction, for example by a wet method involving isopropyl alcohol as a solvent, such as Microtrac S3500. Further, the frit may be dispersed in a solvent such as acetone or water (which may be referred to as a wet process). That is, the enamel composition according to the embodiment may be used in a dispersion form in which the frits are dispersed in the solvent. Further, the enamel composition according to an embodiment may further include an organic binder. That is, the enamel composition according to the embodiment may be used in the form of a paste. Furthermore, when using such a dry process, a dry electrostatic coating can be used to enhance the electrostatic attraction between the frit (powder) and the metal plate. In order to apply a high resistivity value to the frit, a thin film of organic material, which may be an organic binder, is formed on the frit surface for the purpose of making an organic film. The organic material can react with silanol (Si-OH) groups on the frit surface to form siloxane bond. Typical organic materials to be comprised in the thin film of organic material include polymethylhydrogensiloxane, e.g., Dow Corning MHX-1107.

The frit according to the embodiment may form an enamel composition by the following method. Specifically, the frit may be used alone or in combination with other types of frit to form the enamel composition.

That is, a single type of frit according to the embodiment may be used alone to form an enamel composition. This enamel composition may be applied as a functional layer for a cooking appliance. In this connection, the functional layer formed of the single type of frit according to the embodiment may exhibit white color.

Alternatively, the embodiments are not limited thereto. The frit according to the embodiment may be mixed with frit having different compositions and/or composition ratios from those of the frit according to the embodiment. These mixed frits may be used to form an enamel composition. The frits with the different compositions and/or composition ratios may exhibit a color other than white, for example, blue. For example, the mixing ratio between the frit according to the embodiment and the frit of the other type may be about 90: 10 to 99: 1. The color may be measured using a color difference meter and the color value can be obtained based on the Hunter method.

The enamel composition may be applied as a functional layer for a cooking appliance. In this case, the functional layer formed by the frit according to the embodiment may exhibit white.

The enamel composition according to the embodiment may be prepared by the following method.

First, a frit material to form the frit may be prepared. In this connection, the frit material may include P₂O₅, TiO₂, and group I-based oxide. The group I-based oxide may include at least one metal oxide selected from a group consisting of Li₂O, Na₂O and K₂O.

Further, the frit material may include at least one of SiO₂, B₂O₃, Al₂O₃ and ZrO₂. Further, the frit material may include at least one of CaO, MgO, and BaO. Further, the frit material may include at least one of NaF and AlF₃.

The frit material may then be melted. For example, the frit material may be melted at a temperature of about 1100°C to about 1500°C. Further, the frit material may be melted for about 30 minutes to about 2 hours.

Then, the melted frit material may be quenched using chiller or water. Accordingly, the frit may be formed. In this connection, depending on the content of each component contained in the frit material, the content of each component of the formed frit may be determined. That is, the content of each component contained in the frit material may be substantially the same as the content of each component of the frit.

Then, the frits may be dispersed in a solvent such as acetone. Then, the solvent may be dried. Then, the frits may be filtered by a mesh or the like. In particular, the frits may be filtered to have a diameter of about 50 µm or less.

The method for preparing the enamel composition optionally further contains a step of milling the frit, such as ballmilling. In this way, an enamel composition including the frit may be formed.

Then, the enamel composition according to the embodiment may form the functional layer by the following method.

Once an enamel composition according to an embodiment may be used in a dispersion in which the frits are dispersed in a solvent such as water. That is, the frits may be dispersed in a solvent. The enamel composition according to the embodiment may then be coated on a surface of an object to be coated by spraying. The object of interest may be a metal plate or a reinforced glass plate. For example, the object of interest may be an entirety or a portion of the cooking device.

Alternatively, the enamel composition according to the embodiment may be coated on the object in a dry state, i.e., without the use of solvents. Depending on the embodiments, the enamel composition may be coated on the object by electrostatic attraction.

Thereafter, the object coated with the enamel composition according to the embodiment may be fired at a temperature of about 700°C to about 900°C. The coated enamel composition may be fired for about 100 seconds to about 600 seconds.

In this way, the enamel composition according to an embodiment forms a coating layer on the object, and thus the functional layer including the enamel composition may be formed on the object.

The enamel composition according to an embodiment may have a glass deformation temperature TD of about 500°C or higher by appropriately adjusting the composition of the frit material, thereby realizing high heat resistance. Accordingly, the enamel composition according to the embodiment may be efficiently applied to the cooking appliance or the like.

Hereinafter, the present disclosure will be described in more detail based on enamel composition manufacturing methods according to present embodiments and comparison examples. Those embodiments are merely an example to illustrate the present disclosure in more detail. Therefore, the present disclosure is not limited to those embodiments.

### Present embodiment 1

The frit material was provided as in Table 1 below.

At this time, NH₄H₂PO₄ was used as the starting material for P₂O₅; Na₂CO₃, K₂CO₃, Li₂CO₃ were used as starting materials for Na₂O, K20, Li₂O respectively; BaCO₃ and CaCO₃, were used as starting materials for BaO and CaO, respectively; remaining components were the same as those shown in Table 1.

Then, after mixing the frit materials, the mixture was melted at a temperature of about 1400°C for about 1 hour to about 2 hours and then quenched in a quenching roller to obtain glass cullet.

Subsequently, about 0.1 wt% to about 1 wt% of organic polysiloxane (Dow corning MHX-1107) was added to the glass cullet, followed by milling and grinding in a ball mill for about 4 hours to about 6 hours. The crushed cullet passes through a 325 mesh sieve. As a result, the frits were formed to have a particle diameter of about 45 µm or less.

Then, the frits were sprayed onto a low carbon steel sheet having a size of 200 × 200 mm and a thickness of 1 mm or less using a corona discharge gun. In this connection, the voltage of the corona discharge gun was controlled to 40 kV to 100 kV.

The amount of frits sprayed on the low carbon steel sheet was 300 g/m².

Then, the low carbon steel having the frits sprayed thereon was fired at a temperature of 830° C to 870°C for 300 seconds to 450 seconds to form a functional layer on a surface of the low carbon steel.

In this connection, the functional layer was formed to a thickness of about 80 µm to 250 µm. The thickness of the functional layer may be measured using a film thickness meter, such as SALUTRON D1.

### Present embodiment 2

The functional layer was formed in the same manner as the embodiment 1 except frit materials were provided as shown in Table 1 below.

### Present embodiment 3

The functional layer was formed in the same manner as the embodiment 1 except frit materials were provided as shown in Table 1 below.

### Comparison example 1

The functional layer was formed in the same manner as the embodiment 1 except frit materials were provided as shown in Table 1 below.

### Comparison example 2

The functional layer was formed in the same manner as the embodiment 1 except frit materials were provided as shown in Table 1 below.

**[Table 1]**

| composition wt% | embodiment 1 | embodiment 2 | embodiment 3 | comparison example 1 | comparison example 2 |
|---|---|---|---|---|---|
| P₂O₅ | 24.6 | 24.1 | 24.6 | 18.2 | 17.0 |
| SiO₂ | 17.1 | 10.0 | 12.5 | 20.7 | 22.7 |
| b₂O₃ | 11.6 | 12.1 | 12.6 | 11.3 | 12.5 |
| Na₂O | 6.1 | 6.1 | 6.1 | 5.3 | 5.3 |
| K₂O | 10.1 | 11.3 | 11.3 | 10.7 | 10.7 |
| Li₂O | 1.0 | 0.8 | 0.8 | 0.8 | - |
| Al₂O₃ | 10.0 | 18.3 | 10.0 | 16.4 | 18.4 |
| ZrO₂ | 2.4 | 2.4 | 2.0 | 2.3 | 2.3 |
| TiO₂ | 13.5 | 11.3 | 16.1 | 12.8 | 8.8 |
| CaO | 2 | - | - | - | - |
| MgO | - | 2 | - | - | - |
| BaO | - | - | 2 | - | - |
| NaF | 1.6 | - | 1 | 1.5 | 2.3 |
| AlF₃ | - | 1.6 | 1 | - | - |

The applicants then proceeded to characterize the functional layers fabricated by the embodiments and comparison examples.

The softening points Td and the thermal expansion coefficients of the functional layers were measured, and the cleanability of each functional layer was measured by the cleanability test.

In order to measure the thermal properties of the glass, the pellet specimen was fired under the same conditions as those of the enamel composition. After polishing both surfaces of the specimen in parallel with each other, the Td (softening point) and CTE (thermal expansion coefficient) were measured using a TMA (Thermo Mechanical Analyzer) at a temperature increase rate of 10°C/min.

Further, the cleanability was measured by applying a 1 g of chicken oil as a contaminant on the surface of the enamel-coated test body 200 × 200 mm using a brush. Thereafter, the test body to which the contaminant was applied was placed in an incubator, and the contaminants were fixed to the body at a temperature of about 250 degree C and for 1 hour.

After the fixation, the test body was caused to cool naturally, and then the degree of curing thereof was confirmed. Then, the test body was immersed in a water bath at 70°C for 10 seconds to 10 minutes. Thereafter, the cured chicken oil and a cherry pie filling as sugar ingredients were wiped out with a wet cloth at a force of 3 kgf or less. A 5 cm-diameter bottom-flatted rod was used to homogenize the wiped area in the contaminated enamel surface. At this time, the number of wiping reciprocations as shown in Table 2 was measured and defined as the cleaning frequency. The evaluation indexes thereof were as shown in Table 3 and Table 4 below.

The functional layers produced by the frit according to embodiment 1 to embodiment 3 and the comparison examples 1 and 2 exhibit colors as indicated in Table 5 below:

**[Table 2]**

| wiping frequency | performance Level |
|---|---|
| equal to or smaller than 5 | 5 |
| equal to or smaller than 15 | 4 |
| equal to or smaller than 25 | 3 |
| equal to or smaller than 50 | 2 |
| larger than 50 | 1 |

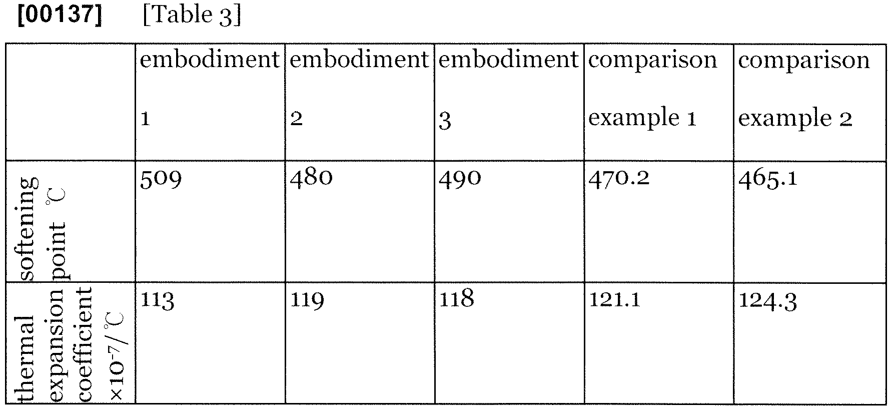

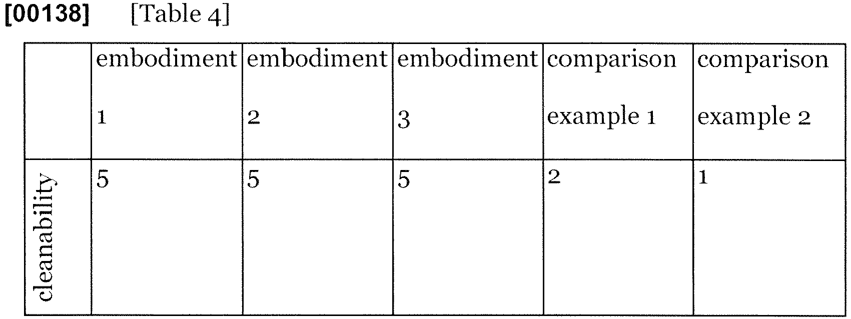

**[Table 5]**

| | embodiment 1 | embodiment 2 | embodiment 3 | comparison example 1 | comparison example 2 |
|---|---|---|---|---|---|
| color | white | white | white | blue | blue |

Referring to Table 3, it may be seen that the functional layers produced by the frits according to the embodiment 1 to embodiment 3 have a high softening point and thermal expansion coefficient. That is, the functional layers produced by the frits of the embodiment 1 to embodiment 3 have a softening point of about 500°C or higher and a thermal expansion coefficient of about 100 (10⁻⁷/°C) or more.

That is, it may be seen that the functional layers formed by the frits according to the embodiment 1 to embodiment 3 have improved durability and chemical resistance.

Further, referring to Table 4, it may be seen that the functional layers formed by the frits according to the embodiment 1 to embodiment 3 have improved cleanability compared to the functional layers formed by the frits according to the comparison examples 1 and 2.

Further, referring to Table 5, it may be seen that the functional layers produced by the frit according to embodiment 1 to embodiment 3 exhibit a white color. That is, while the functional layer produced by frits according to comparison examples exhibit a blue color, each of the frits according to embodiment 1 to embodiment 3 may implement a white functional layer even if used alone.

According to the present disclosure, the enamel composition may have improved cleanability. Accordingly, the cleaning of the cooking appliance may be improved. In detail, the cooking appliance can be easily cleaned only with water-soaking.

That is, although the inner surface of the door and the inner surface of the cavity portion are contaminated by food and organic substances generated during the cooking process while the cooking space defined in the cavity portion of the cooking appliance is closed, the inner surface of the door and the inner surface of the cavity portion may easily be cleaned simply by water-soaking.

Further, the enamel composition according to the embodiment can be formed into a white functional layer by using only a single type of frit. Accordingly, it is possible to omit the step of mixing different types of frit to realize the white color, and, thus, the process efficiency can be improved.

Further, since the functional layer formed by using the enamel composition according to the embodiment is excellent in cleanability, the inner surface of the cooking appliance can be easily cleaned even with little energy consumption.

Further, contaminants including oil, such as chicken oil, and sugars can be effectively removed with less energy and less time, from the functional layer coated by the enamel composition according to the embodiment.

Further, since the functional layer may be directly coated on the inner faces of the cavity portion and the door without a separate buffer layer therebetween, this can improve production process efficiency and minimize an increase in thickness of the cavity portion and door due to the coating of the functional layer.

Further, since the enamel composition according to the embodiment has a softening point higher than a certain temperature and a proper thermal expansion coefficient, the composition can withstand cooking and cleaning at a high temperature for a long time.

While the embodiments have been described above, the present disclosure is not intended to limit the embodiments. Those skilled in the art will recognize that various changes and modifications may be possible without departing from the essential characteristics of the present invention. For example, each component specifically illustrated in the embodiment may be modified. It is also to be understood that the various modifications and variations are intended to be included within the scope of the present disclosure as defined in the appended claims.

## Claims

1. An enamel composition comprising frit including P₂O₅, TiO₂, group I-based oxide, and one or more fluorinated compounds,
wherein P₂O₅ is contained in an amount of 20 wt% to 30 wt% based on the total weight of the frit,
wherein TiO₂ is contained in an amount of 10 wt% to 20 wt% based on the total weight of the frit,
wherein the group I-based oxide is contained in an amount of 15 wt% to 30 wt% based on the total weight of the frit, and
wherein the fluorinated compound is selected from NaF and AlF₃, and is contained in an amout of 0.1 wt% to 5 wt%, based on the total weight of the frit.

2. The enamel composition of claim 1, wherein the group I-based oxide includes at least one metal oxide selected from a group consisting of Li₂O, Na₂O and K₂O.

3. The enamel composition of claim 2, wherein the frit further comprises SiO₂, wherein SiO₂ is contained in an amount of 10 wt% to 20 wt% based on the total weight of the frit.

4. The enamel composition of claim 3, wherein the frit further comprises B₂O₃, wherein B₂O₃ is contained in an amount of 5 wt% to 15 wt% based on the total weight of the frit.

5. The enamel composition of claim 4, wherein the frit further comprises Al₂O₃, wherein Al₂O₃ is contained in an amount of 10 wt% to 30 wt% based on the total weight of the frit.

6. The enamel composition of claim 4, wherein the frit further comprises ZrO₂, wherein ZrO₂ is contained in an amount of 1 wt% to 5 wt% based on the total weight of the frit.

7. The enamel composition of claim 1, wherein the frit further includes a group II-based oxide, wherein the group II-based oxide includes at least one oxide selected from a group consisting of CaO, MgO and BaO, and wherein the group II-based oxide is contained in an amount of 0.1 wt% to 10 wt% based on the total weight of the frit.

8. A method for producing an enamel composition, the method comprising:
preparing frit material including P₂O₅, TiO₂, group I-based oxide and one or more fluorinated compounds;
melting the frit material; and
quenching the melted frit material to form frit,
wherein P₂O₅ is contained in an amount of 20 wt% to 30 wt% based on the total weight of the frit,
wherein TiO₂ is contained in an amount of 10 wt% to 20 wt% based on the total weight of the frit,
wherein the group I-based oxide is contained in an amount of 15 wt% to 30 wt% based on the total weight of the frit, and
wherein the fluorinated compound is selected from NaF and AlF₃, and is contained in an amout of 0.1 wt% to 5 wt%, based on the total weight of the frit.

9. The method of claim 8, wherein the frit further comprises at least one of SiO₂, B₂O₃, Al₂O₃, ZrO₂ and group II-based oxide,
wherein SiO₂ is optionally contained in an amount of 10 wt% to 20 wt% based on the total weight of the frit,
wherein B₂O₃ is optionally contained in an amount of 5 wt% to 15 wt% based on the total weight of the frit,
wherein Al₂O₃ is optionally contained in an amount of 10 wt% to 30 wt% based on the total weight of the frit,
wherein ZrO₂ is optionally contained in an amount of 1 wt% to 5 wt% based on the total weight of the frit,
wherein the group II-based oxide is optionally contained in an amount of 0.1 wt% to 10 wt% based on the total weight of the frit.

10. The method of claim 9, wherein the group I-based oxide includes at least one metal oxide selected from a group consisting of Li₂O, Na₂O and K₂O, and
the group II-based oxide includes at least one oxide selected from a group consisting of CaO, MgO and BaO.

11. A cooking device comprising:
a cavity portion having a cooking space defined therein;
a door configured to selectively open and close the cooking space; and
at least one heat source configured to supply heat for heating food to be cooked within the cooking space,
wherein at least one of the cavity portion and the door comprises a metal base, and a functional layer on the metal base,
wherein the functional layer comprises an enamel composition according to any one of claims 1 to 7.

12. The device of claim 11, wherein the enamel composition is obtainable using a single type of frit.

13. The device of claim 11, wherein the enamel composition is obtainable using at least two different types of frits having different compositions and composition ratios.

14. The device of claim 11, wherein the functional layer has a white color.

## Patentansprüche

1. Eine Emailzusammensetzung, die Fritte umfasst, welche P₂O₅, TiO₂, Gruppe I basiertes Oxid und eine oder mehrere fluorierte Verbindungen enthält,
wobei P₂O₅ in einer Menge von 20 Gew.-% bis 30 Gew.-%, bezogen auf das Gesamtgewicht der Fritte, enthalten ist,
wobei TiO₂ in einer Menge von 10 Gew.-% bis 20 Gew.-%, bezogen auf das Gesamtgewicht der Fritte, enthalten ist,
wobei das Gruppe I basierte Oxid in einer Menge von 15 Gew.-% bis 30 Gew.-%, bezogen auf das Gesamtgewicht der Fritte, enthalten ist, und
wobei die fluorierte Verbindung aus NaF und AlF₃ ausgewählt ist und in einer Menge von 0,1 Gew.-% bis 5 Gew.-%, bezogen auf das Gesamtgewicht der Fritte, enthalten ist.

2. Die Emailzusammensetzung nach Anspruch 1, wobei das Gruppe I basierte Oxid mindestens ein Metalloxid umfasst, ausgewählt aus einer Gruppe bestehend aus Li₂O, Na₂O und K₂O.

3. Die Emailzusammensetzung nach Anspruch 2, wobei die Fritte ferner Si02 umfasst, wobei Si02 in einer Menge von 10 Gew.-% bis 20 Gew.-%, bezogen auf das Gesamtgewicht der Fritte, enthalten ist.

4. Die Emailzusammensetzung nach Anspruch 3, wobei die Fritte ferner B₂O₃ umfasst, wobei B₂O₃ in einer Menge von 5 Gew.-% bis 15 Gew.-%, bezogen auf das Gesamtgewicht der Fritte, enthalten ist.

5. Die Emailzusammensetzung nach Anspruch 4, wobei die Fritte ferner Al₂O₃ umfasst, wobei Al₂O₃ in einer Menge von 10 Gew.-% bis 30 Gew.-%, bezogen auf das Gesamtgewicht der Fritte, enthalten ist.

6. Die Emailzusammensetzung nach Anspruch 4, wobei die Fritte ferner ZrO₂ umfasst, wobei ZrO₂ in einer Menge von 1 Gew.-% bis 5 Gew.-%, bezogen auf das Gesamtgewicht der Fritte, enthalten ist.

7. Die Emailzusammensetzung nach Anspruch 1, wobei die Fritte ferner ein Gruppe II basiertes Oxid enthält, wobei das Gruppe II basierte Oxid mindestens ein Oxid umfasst, ausgewählt aus einer Gruppe bestehend aus CaO, MgO und BaO, und wobei das Gruppe II basierte Oxid in einer Menge von 0,1 Gew.-% bis 10 Gew.-%, bezogen auf das Gesamtgewicht der Fritte, enthalten ist.

8. Ein Verfahren zur Herstellung einer Emailzusammensetzung, wobei das Verfahren umfasst:
Herstellen eines Frittenmaterials, das P₂O₅, TiO₂, Gruppe I basiertes Oxid und eine oder
mehrere fluorierte Verbindungen enthält;
Schmelzen des Frittenmaterials; und
Abschrecken des geschmolzenen Frittenmaterials, um eine Fritte zu bilden,
wobei P₂O₅ in einer Menge von 20 Gew.-% bis 30 Gew.-%, bezogen auf das Gesamtgewicht der Fritte, enthalten ist,
wobei Ti02 in einer Menge von 10 Gew.-% bis 20 Gew.-%, bezogen auf das Gesamtgewicht der Fritte, enthalten ist,
wobei das Gruppe I basierte Oxid in einer Menge von 15 Gew.-% bis 30 Gew.-%,
bezogen auf das Gesamtgewicht der Fritte, enthalten ist, und
wobei die fluorierte Verbindung aus NaF und AlF₃ ausgewählt ist und in einer Menge von 0,1 Gew.-% bis 5 Gew.-%, bezogen auf das Gesamtgewicht der Fritte, enthalten ist.

9. Das Verfahren nach Anspruch 8, wobei die Fritte ferner mindestens eines aus SiO₂, B₂O₃, Al₂O₃, ZrO₂ und Gruppe II basiertem Oxid umfasst,
wobei SiO₂ gegebenenfalls in einer Menge von 10 Gew.-% bis 20 Gew.-%, bezogen auf das Gesamtgewicht der Fritte, enthalten ist,
wobei B₂O₃ gegebenenfalls in einer Menge von 5 Gew.-% bis 15 Gew.-%, bezogen auf das Gesamtgewicht der Fritte, enthalten ist,
wobei Al₂O₃ gegebenenfalls in einer Menge von 10 Gew.-% bis 30 Gew.-%, bezogen auf das Gesamtgewicht der Fritte, enthalten ist,
wobei ZrO₂ gegebenenfalls in einer Menge von 1 Gew.-% bis 5 Gew.-%, bezogen auf das Gesamtgewicht der Fritte, enthalten ist,
wobei das Gruppe II basierte Oxid gegebenenfalls in einer Menge von 0,1 Gew.-% bis 10 Gew.-%, bezogen auf das Gesamtgewicht der Fritte, enthalten ist.

10. Das Verfahren nach Anspruch 9, wobei das Gruppe I basierte Oxid mindestens ein Metalloxid umfasst, ausgewählt aus einer Gruppe bestehend aus Li₂O, Na20 und K₂O, und
das Gruppe II basierte Oxid mindestens ein Oxid umfasst, ausgewählt aus einer Gruppe bestehend aus CaO, MgO und BaO.

11. Eine Kochvorrichtung, umfassend:
einen Hohlraumbereich mit einem darin definierten Garraum;
eine Tür, die konfiguriert ist, um den Garraum wahlweise zu öffnen und zu schließen; und
mindestens eine Wärmequelle, die konfiguriert ist, um Wärme zum Erwärmen der im Garraum zu garenden Lebensmittel bereit zu stellen,
wobei mindestens einer/eine von dem Hohlraumbereich und der Tür eine Metallbasis und eine funktionale Schicht auf der Metallbasis umfasst,
wobei die funktionale Schicht eine Emailzusammensetzung nach einem der Ansprüche 1 bis 7 umfasst.

12. Die Vorrichtung nach Anspruch 11, wobei die Emailzusammensetzung unter Verwendung eines einzigen Frittentyps erhältlich ist.

13. Die Vorrichtung nach Anspruch 11, wobei die Emailzusammensetzung unter Verwendung von mindestens zwei verschiedenen Frittentypen mit verschiedenen Zusammensetzungen und Zusammensetzungsverhältnissen erhältlich ist.

14. Die Vorrichtung nach Anspruch 11, wobei die funktionale Schicht eine weiße Farbe aufweist.

## Revendications

1. Composition d'émail comprenant une fritte contenant du P₂O₅, du TiO₂, un oxyde à base d'un élément du Groupe I, et un ou plusieurs composés fluorés, dans laquelle le P₂O₅ est contenu en une quantité de 20 % en poids à 30 % en poids par rapport au poids total de la fritte,
dans laquelle le TiO₂ est contenu en une quantité de 10 % en poids à 20 % en poids par rapport au poids total de la fritte,
dans laquelle l'oxyde à base d'un élément du Groupe I est contenu en une quantité de 15 % en poids à 30 % en poids par rapport au poids total de la fritte, et
dans laquelle le composé fluoré est choisi parmi NaF et AlF₃, et est contenu en une quantité de 0,1 % en poids à 5 % en poids par rapport au poids total de la fritte.

2. Composition d'émail selon la revendication 1, dans laquelle l'oxyde à base d'un élément du Groupe I contient au moins un oxyde métallique choisi dans le groupe constitué par Li₂O, Na₂O et K₂O.

3. Composition d'émail selon la revendication 2, dans laquelle la fritte comprend en outre du SiO₂, dans laquelle le SiO₂ est contenu en une quantité de 10 % en poids à 20 % en poids par rapport au poids total de la fritte.

4. Composition d'émail selon la revendication 3, dans laquelle la fritte comprend en outre du B₂O₃, dans laquelle le B₂O₃ est contenu en une quantité de 5 % en poids à 15 % en poids par rapport au poids total de la fritte.

5. Composition d'émail selon la revendication 4, dans laquelle la fritte comprend en outre de l'Al₂O₃, dans laquelle l'Al₂O₃ est contenu en une quantité de 10 % en poids à 30 % en poids par rapport au poids total de la fritte.

6. Composition d'émail selon la revendication 4, dans laquelle la fritte comprend en outre du ZrO₂, dans laquelle le ZrO₂ est contenu en une quantité de 1 % en poids à 5 % en poids par rapport au poids total de la fritte.

7. Composition d'émail selon la revendication 1, dans laquelle la fritte contient en outre un oxyde à base d'un élément du Groupe II, dans laquelle l'oxyde à base d'un élément du Groupe II contient au moins un oxyde choisi dans le groupe constitué par CaO, MgO et BaO, et dans laquelle l'oxyde à base d'un élément du Groupe II est contenu en une quantité de 0,1 % en poids à 10 % en poids par rapport au poids total de la fritte.

8. Méthode pour produire une composition d'émail, la méthode comprenant :
la préparation d'un matériau de fritte contenant du P₂O₅, du TiO₂, un oxyde à base d'un élément du Groupe I, et un ou plusieurs composés fluorés ;
la fonte du matériau de fritte ; et
le refroidissement brutal du matériau de fritte fondu pour former une fritte,
dans laquelle le P₂O₅ est contenu en une quantité de 20 % en poids à 30 % en poids par rapport au poids total de la fritte,
dans laquelle le TiO₂ est contenu en une quantité de 10 % en poids à 20 % en poids par rapport au poids total de la fritte,
dans laquelle l'oxyde à base d'un élément du Groupe I est contenu en une quantité de 15 % en poids à 30 % en poids par rapport au poids total de la fritte, et
dans laquelle le composé fluoré est choisi parmi NaF et AlF₃, et est contenu en une quantité de 0,1 % en poids à 5 % en poids par rapport au poids total de la fritte.

9. Méthode selon la revendication 8, dans laquelle la fritte comprend en outre au moins l'un parmi le SiO₂, le B₂O₃, l'Al₂O₃, le ZrO₂ et un oxyde à base d'un élément du Groupe II,
dans laquelle le SiO₂ est optionellement contenu en une quantité de 10 % en poids à 20 % en poids par rapport au poids total de la fritte,
dans laquelle le B₂O₃ est optionellement contenu en une quantité de 5 % en poids à 15 % en poids par rapport au poids total de la fritte,
dans laquelle l'Al₂O₃ est optionellement contenu en une quantité de 10 % en poids à 30 % en poids par rapport au poids total de la fritte,
dans laquelle le ZrO₂ est optionellement contenu en une quantité de 1 % en poids à 5 % en poids par rapport au poids total de la fritte,
dans laquelle l'oxyde à base d'un élément du Groupe II est optionellement contenu en une quantité de 0,1 % en poids à 10 % en poids par rapport au poids total de la fritte.

10. Méthode selon la revendication 9, dans laquelle
l'oxyde à base d'un élément du Groupe I contient au moins un oxyde métallique choisi dans le groupe constitué par Li₂O, Na₂O et K₂O, et
l'oxyde à base d'un élément du Groupe II contient au moins un oxyde choisi dans le groupe constitué par CaO, MgO et BaO.

11. Appareil de cuisson comprenant :
une partie de cavité ayant un espace de cuisson défini dans celle-ci ;
une porte configurée pour ouvrir et fermer sélectivement l'espace de cuisson ; et
au moins une source de chaleur configurée pour fournir de la chaleur pour chauffer un aliment devant être cuit dans l'espace de cuisson,
dans lequel au moins l'une parmi la partie de cavité et la porte comprend une base métallique, et une couche fonctionnelle sur la base métallique,
dans lequel la couche fonctionnelle comprend une composition d'émail selon l'une quelconque des revendications 1 à 7.

12. Appareil selon la revendication 11, dans lequel la composition d'émail peut être obtenue par utilisation d'un seul type de fritte.

13. Appareil selon la revendication 11, dans lequel la composition d'émail peut être obtenue par utilisation d'au moins deux types différents de frittes ayant des compositions et des rapports de composition différents.

14. Appareil selon la revendication 11, dans lequel la couche fonctionnelle a une couleur blanche.
